# EUROPÄISCHE PATENTSCHRIFT

(11) **EP 2 897 765 B1**
(45) Veröffentlichungstag und Bekanntmachung des Hinweises auf die Patenterteilung: **02.11.2016**
(21) Anmeldenummer: 13765672.4
(22) Anmeldetag: 12.09.2013
(51) Int. Cl.: B23Q 1/66, B23Q 11/08

(54) **BEARBEITUNGSMASCHINE UND VERFAHREN ZUM BEARBEITEN EINES WERKSTÜCKS**
MACHINE TOOL AND METHOD FOR MACHINING A WORKPIECE
MACHINE D'USINAGE ET PROCÉDÉ POUR USINER UNE PIÈCE

(30) Priorität: 18.09.2012 DE 102012216632
(43) Veröffentlichungstag der Anmeldung: 29.07.2015
(73) Patentinhaber: TRUMPF Laser GmbH, 78713 Schramberg (DE)
(72) Erfinder: DÖTTLING, Jürgen, 78713 Schramberg (DE); GANTER, Robert, 70839 Gerlingen (DE); BANHOLZER, Rainer, 78662 Bösingen (DE)
(74) Vertreter: Kohler Schmid Möbus Patentanwälte
(86) Internationale Anmeldenummer: PCT/EP2013/068922
(87) Internationale Veröffentlichungsnummer: WO 2014/044594

(56) Entgegenhaltungen:
- EP-A1- 0 642 883
- DE-A1- 4 306 093
- DE-A1- 19 907 617

## Beschreibung

Die vorliegende Erfindung betrifft eine Bearbeitungsmaschine, umfassend: eine Trenneinrichtung zur Aufteilung eines Arbeitsraums in einen Bearbeitungsbereich zum Bearbeiten eines Werkstücks und in mindestens einen weiteren Arbeitsbereich, einen Bearbeitungskopf, insbesondere einen Laserbearbeitungskopf, zum Bearbeiten des Werkstücks in dem Bearbeitungsbereich, einen Rotationswerkstückwechsler mit einer drehbaren Werkstückauflage zum Transport des Werkstücks zwischen dem Bearbeitungsbereich und dem mindestens einen weiteren Arbeitsbereich durch eine in der Trenneinrichtung gebildete Öffnung, wobei die drehbare Werkstückauflage eine Schutzwand aufweist, um bei der Bearbeitung des Werkstücks den mindestens einen weiteren Arbeitsbereich gegenüber dem Bearbeitungsbereich abzuschirmen. Die Erfindung betrifft auch ein Verfahren zum Bearbeiten eines Werkstücks mit einer solchen Bearbeitungsmaschine. Die DE 43 06 093 A1 offenbart eine Bearbeitungsmaschine, umfassend: eine Trenneinrichtung zur Aufteilung eines Arbeitsraums in einen Bearbeitungsbereich zum Bearbeiten eines Werkstücks und in einen weiteren Arbeitsbereich, einen Bearbeitungskopf zum Bearbeiten des Werkstücks in dem Bearbeitungsbereich, einen Rotationswerkstückwechsler mit einer drehbaren Werkstückauflage, wobei die drehbare Werkstückauflage eine Schutzwand aufweist, um bei der Bearbeitung des Werkstücks den mindestens einen weiteren Arbeitsbereich gegenüber dem Bearbeitungsbereich abzuschirmen.

Aus der DE 10 2006 022 304 A1 ist ein Verfahren zur dezentralen Steuerung einer Bearbeitungsmaschine, insbesondere einer Laserbearbeitungsmaschine, bekannt geworden. Die Bearbeitungsmaschine umfasst einen Bearbeitungsbereich, der von einem Schutzgehäuse umgeben ist. Ein überwachter Zugangsbereich zu dem Bearbeitungsbereich ist durch eine Trenneinrichtung in Form einer Trennwand von dem Bearbeitungsbereich getrennt. In einem Ausführungsbeispiel weist die Bearbeitungsmaschine einen Rotationswechsler mit einer Be- und Entladestation sowie mit einer Bearbeitungsstation auf. Die Be- und Entladestation des Rotationswechslers wird durch eine mitdrehende Schutzwand von der Bearbeitungsstation getrennt. Durch eine Drehbewegung des Rotationswechslers kann das Werkstück von dem Bearbeitungsbereich in den Zugangsbereich und zurück transportiert werden.

Die an dem Rotationswechsler angebrachte mitdrehende Schutzwand soll den Zugangsbereich bei der Bearbeitung des Werkstücks vor Strahlung aus dem Bearbeitungsbereich schützen bzw. diesen vor der Strahlung abschirmen. Um eine lichtdichte Abschirmung zu realisieren, ist es erforderlich, die mitdrehende Schutzwand des Rotationswerkstückwechslers gegen die Kanten einer Öffnung, die in der Trennwand für den Durchtritt des Werkstücks gebildet ist, lichtdicht abzudichten. Die Dichtkanten werden üblicher Weise mit Elastomer- oder Bürstendichtungen ausgeführt. Mit den hohen Laserleistungen, die bei der Werkstückbearbeitung in der Regel verwendet werden, sind hohe Energiedichten verbunden, welche die Dichtungen schädigen bzw. zerstören können. Daher ist in der Regel ein Schutz der Dichtungen vor der Laserstrahlung durch zusätzliche Schieber oder Schutzbleche erforderlich, welche der Laserstrahlung besser standhalten können.

Bei der Verwendung der mitdrehenden Schutzwand kann zudem das Problem auftreten, dass eine Bearbeitung des Werkstücks in der Nähe der Schutzwand erschwert wird oder ggf. unmöglich ist, da der Bearbeitungskopf eine Störkontur bildet. Hierdurch wird die mittels des Bearbeitungskopfs zugängliche Fläche an der drehbaren Werkstückauflage und damit der Bearbeitungsbereich der Bearbeitungsmaschine reduziert.

### Aufgabe der Erfindung

Es ist die Aufgabe der vorliegenden Erfindung, eine Bearbeitungsmaschine und ein Verfahren der eingangs genannten Art dahingehend weiterzubilden, dass die Prozesssicherheit verbessert und/oder die Kompaktheit der Bearbeitungsmaschine erhöht wird.

### Gegenstand der Erfindung

Gemäß einem ersten Aspekt wird diese Aufgabe gelöst durch eine Bearbeitungsmaschine der eingangs genannten Art, bei der die Trenneinrichtung ein Schutzelement aufweist, das zwischen einer Bearbeitungsstellung und einer Transportstellung bewegbar ist, wobei das Schutzelement in der Bearbeitungsstellung zum Verschließen der Öffnung der Trenneinrichtung an der Schutzwand anliegt und wobei das Schutzelement in der Transportstellung von der Schutzwand beabstandet ist.

Da beim Transport des auf der Werkstückauflage befindlichen Werkstücks keine Werkstückbearbeitung stattfindet, ist eine lichtdichte Abdichtung zwischen dem Bearbeitungsbereich und dem mindestens einen weiteren Arbeitsbereich während der Drehbewegung der Werkstückauflage nicht erforderlich. Daher kann beim Transport des Werkstücks das Schutzelement in die von der Schutzwand beabstandete Transportstellung verbracht werden, ohne dass die Prozesssicherheit abnimmt. Durch das bewegliche Schutzelement kann auf die Verwendung von elastischen Dichtungen an den Kanten der Öffnung bzw. der Schutzwand sowie auf Schutzbleche bzw. Blenden zur Abschirmung der Dichtungen verzichtet werden.

Die Trenneinrichtung kann beispielsweise in der Art einer Trennwand ausgebildet sein. Die in der Trenneinrichtung vorgesehene Öffnung wird teilweise von der mit der drehbaren Werkstückauflage mitdrehenden Schutzwand abgedeckt. Durch die Schutzwand kann die Strecke reduziert werden, die das Schutzelement zwischen der Bearbeitungsstellung und der Transportstellung zurücklegen muss, wodurch die Zykluszeit beim Transport reduziert wird. Das Schutzelement kann insbesondere ganz oder teilweise aus einem metallischen Material, z.B. aus Aluminium, bestehen, welches typischer Weise eine besonders effektive Abschirmung vor bei der Bearbeitung erzeugter (Laser-)Strahlung ermöglicht. Das Schutzelement wird typischer Weise in einer (vertikalen) Hubbewegung von der Bearbeitungsstellung in die Transportstellung verbracht, es ist aber auch möglich, eine andere Art der Bewegung des Schutzelements, beispielsweise eine Schwenkbewegung, zu realisieren.

Die drehbare Werkstückauflage kann beispielsweise in der Art eines (runden) Drehtellers ausgebildet sein, es sind aber auch andere Geometrien möglich, z.B. kann die Werkstückauflage eine rechteckige oder quadratische Form aufweisen. Die Schutzwand kann die drehbare Werkstückauflage in zwei flächenmäßig gleich große Teilbereiche aufteilen, es ist aber auch eine Aufteilung in drei oder mehr gleich große Teilbereiche möglich. Durch eine Drehung der Werkstückauflage um einen entsprechenden Winkel (180°, 120°, etc.) kann die Zuordnung der Teilbereiche der drehbaren Werkstückauflage zu den jeweiligen Bereichen geändert bzw. getauscht werden.

Bei einer Weiterbildung dieses ersten Aspekts bzw. bei einem zweiten Aspekt der Erfindung, für den auch unabhängig vom ersten Aspekt ein Schutz beansprucht wird, ist an der Öffnung der Trenneinrichtung angrenzend zur Schutzwand ein Freiraum für den Eingriff eines Teilbereichs des Bearbeitungskopfs gebildet.

Durch das Vorsehen des Freiraums angrenzend zur drehbaren Schutzwand kann die Bearbeitung des Werkstücks auch in unmittelbarer Nähe zur Schutzwand erfolgen, da der Teilbereich des Bearbeitungskopfs, der eine Störkontur für die Bearbeitung bildet, in den Freiraum eingreifen kann. Auf diese Weise kann die durch den Bearbeitungskopf erreichbare Fläche der drehbaren Werkstückauflage und damit der Bearbeitungsbereich der Bearbeitungsmaschine vergrößert werden. Dies ermöglicht eine kompakte Bauweise der Bearbeitungsmaschine in Kombination mit der Bearbeitung von möglichst großen Werkstücken.

Es versteht sich, dass bei der Verwendung eines Bearbeitungskopfs in Form eines Laserbearbeitungskopfs beim Vorsehen des Freiraums sichergestellt werden muss, dass die Öffnung in der Trenneinrichtung während der Bearbeitung des Werkstücks lichtdicht verschlossen ist. Dies kann bei dem oben beschriebenen ersten Aspekt der Erfindung durch das bewegbare, insbesondere verschiebbare Schutzelement erfolgen.

Es ist aber auch möglich, die Trenneinrichtung zumindest im Bereich der Öffnung in eine dem Bearbeitungsbereich abgewandte Richtung parallel zur Schutzwand zu versetzen, so dass ein Freiraum oberhalb der Schutzwand gebildet wird, der auf die oben beschriebene Weise abgedichtet werden kann. Auch ist es möglich, zur Bildung des Freiraums die Trenneinrichtung bzw. die Trennwand in der Verlängerung der Schutzwand anzuordnen, aber die Trenneinrichtung bzw. die Trennwand unmittelbar oberhalb der Öffnung in der Dicke zu reduzieren und nur an einer dem Bearbeitungsbereich abgewandten Seite auszubilden. Es versteht sich, dass bei einer Bearbeitungsmaschine, bei der keine Laserbearbeitung, sondern eine andere, beispielsweise spanende Art der Bearbeitung erfolgt, auf eine lichtdichte Abdichtung zwischen der Schutzwand und der Trenneinrichtung verzichtet werden kann.

Bei einer bevorzugten Ausführungsform ist das Schutzelement an einer dem Bearbeitungsbereich abgewandten Seite der Trenneinrichtung angebracht. Durch eine solche Anbringung kann auf einfache Weise der oben beschriebene Freiraum oberhalb der Schutzwand realisiert und damit der Arbeitsbereich der Bearbeitungsmaschine vergrößert werden.

Bei einer Weiterbildung weist das Schutzelement einen zur Schutzwand hin geneigten Auslegerarm auf, der in der Bearbeitungsstellung mit seinem freien Ende an einer dem Bearbeitungsbereich abgewandten Seite der Schutzwand positionierbar ist. Der Auslegerarm kann insbesondere mit seinem freien Ende an einem an der Oberseite der Schutzwand gebildeten Absatz in Anlage gebracht werden, um ein lichtdichtes Verschließen der Öffnung zu bewirken. Das Schutzelement (mit oder ohne Auslegerarm) ist vorzugsweise einteilig ausgebildet.

Bei einer weiteren Ausführungsform übergreift das Schutzelement in der Bearbeitungsstellung die Schutzwand. In diesem Fall ist das obere Ende der Schutzwand von beiden Seiten von dem Schutzelement umgeben, wodurch ein Durchtritt von Laserstrahlung auf besonders effektive Weise verhindert werden kann.

Bei einer Weiterbildung weist das Schutzelement zum Übergreifen der Schutzwand eine Abschirmung, beispielsweise ein Abschirmblech, auf, welche in der Bearbeitungsstellung an einer dem Bearbeitungsbereich zugewandten Seite der Schutzwand positionierbar ist. Die Abschirmung kann beispielsweise im Bereich des freien Endes des Auslegerarms angebracht sein. Die Verwendung einer dünnen Abschirmung ist vorteilhaft, um den Eingriff des Bearbeitungskopfs in den oberhalb der Schutzwand gebildeten Freiraum nicht zu behindern.

In einer vorteilhaften Ausführungsform ist das Schutzelement zwischen der Bearbeitungsstellung und der Transportstellung insbesondere in vertikaler Richtung (d.h. in einer Hub- bzw. Senkbewegung) linear beweglich, insbesondere linear verschiebbar. Die Linearbewegung kann auf besonders schnelle Weise z.B. mittels eines Linear-(Direkt)-Antriebs erfolgen, so dass die Zykluszeit minimiert werden kann. Die Schutzwand bzw. die Drehachse des Rotationswerkstückwechslers verläuft typischer Weise ebenfalls in vertikaler Richtung.

Bei einer weiteren Ausführungsform ist ein Abstand zwischen der Bearbeitungsstellung und der Transportstellung des Schutzelements in Abhängigkeit von den Abmessungen des Werkstücks, insbesondere von der Höhe des Werkstücks einstellbar. Für den Transport des Werkstücks muss das Schutzelement nur so weit angehoben werden, dass es bei der Drehbewegung nicht zu einer Kollision des Schutzelements mit dem Werkstück kommt. Daher ist es günstig, wenn das Schutzelement bzw. die Trenneinrichtung mit einem steuerbaren Antrieb versehen ist, der das Zustellen des Schutzelements in unterschiedlichen Abständen von der ortsfesten Bearbeitungsstellung ermöglicht. Eine in der Bearbeitungsmaschine vorgesehene Steuereinrichtung kann der Ansteuerung des Antriebs für das Schutzelement in Abhängigkeit von Daten über die Abmessungen, insbesondere (im Falle einer vertikalen Drehachse) über die Höhe des zu bearbeitenden bzw. bearbeiteten Werkstücks dienen. Diese Daten sind in einer Speichereinrichtung hinterlegt, auf welche die Steuereinrichtung zugreifen kann. Es versteht sich, dass die (lineare) Bewegung des Schutzelements nur bis zu einem maximalen Abstand von der Bearbeitungsstellung möglich ist, der von der Bauform der Bearbeitungsmaschine abhängt und beispielsweise in der Größenordnung von ca.

600 mm liegen kann. Es versteht sich, dass in der Transportstellung ein minimaler Abstand (beispielsweise ca. 50 mm) zwischen dem Schutzelement und der Schutzwand nicht unterschritten werden darf, damit sichergestellt ist, dass die Schutzwand bei der Drehbewegung am Schutzelement vorbeikommt.

In einer weiteren Ausführungsform ist in der Schutzwand und/oder in dem Schutzelement ein Hohlraum gebildet. Der Hohlraum der Schutzwand und ggf. auch des Schutzelements kann zur Aufnahme von Bauteilen wie Versorgungsleitungen und/oder Ansteuerkomponenten, beispielsweise von Ventilen oder dergleichen, dienen.

Bei einer Weiterbildung ist in dem Hohlraum der Schutzwand und/oder in dem Hohlraum des Schutzelements mindestens ein Sensor zur Detektion von in den Hohlraum eintretender Bearbeitungsstrahlung angeordnet. Der Hohlraum ist in der Regel lichtdicht abgeschlossen. Durch den Sensor kann frühzeitig erkannt werden, wenn die Schutzwand und/oder das Schutzelement durch die Bearbeitungsstrahlung im Bearbeitungsbereich beschädigt wird, da durch die Beschädigung die Bearbeitungsstrahlung in den Hohlraum gelangt. Eine Beschädigung des Schutzelements und/oder der Schutzwand kann trotz der Verwendung von laserbeständigen Materialien beispielsweise entstehen, wenn vom Werkstück reflektierte Bearbeitungsstrahlung mit hoher Energiedichte in einem eng begrenzten Bereich auf die Schutzwand und/oder auf das Schutzelement trifft. Der Sensor kann insbesondere mit einer Steuereinrichtung in signaltechnischer Verbindung stehen, um im Fehlerfall eine Warnung an einen Bediener auszugeben und/oder um die Bearbeitung zu stoppen bzw. die für die Bearbeitung verwendete Strahlquelle zu deaktivieren. Um den Hohlraum leicht überwachen zu können, ist es günstig, wenn das Schutzelement und/oder die Schutzwand einteilig ausgeführt sind.

Ein weiterer Aspekt der Erfindung ist verwirklicht in einem Verfahren zum Bearbeiten eines Werkstücks mittels einer Bearbeitungsmaschine, die wie oben beschrieben ausgebildet ist, das Verfahren umfassend: in einem dem Bearbeiten vorausgehenden Schritt: Bewegen des Schutzelements in die Bearbeitungsstellung, in der das Schutzelement an der Schutzwand anliegt, sowie nach dem Bearbeiten: Bewegen des Schutzelements von der Bearbeitungsstellung in die Transportstellung sowie Drehen der drehbaren Werkstückauflage zum Verbringen des bearbeiteten Werkstücks von dem Bearbeitungsbereich in einen weiteren Arbeitsbereich.

In dem weiteren Arbeitsbereich kann das Werkstück beispielsweise aus der Bearbeitungsmaschine entnommen werden. Es ist aber auch möglich, dass nach der Bearbeitung des Werkstücks in dem Bearbeitungsbereich an mindestens einem weiteren Arbeitsbereich eine Nachbearbeitung des Werkstücks erfolgt. Ebenso können vor dem Transport des Werkstücks in den Bearbeitungsbereich an dem Werkstück bereits eine oder mehrere vorbereitende Bearbeitungsschritte an anderen Arbeitsbereichen vorgenommen werden.

Bei einer Weiterbildung dieses Verfahrens bzw. bei einem Verfahren, welches dem weiter oben beschriebenen zweiten erfinderischen Aspekt der Bearbeitungsmaschine entspricht, wird beim Bearbeiten des Werkstücks ein Teilbereich des Bearbeitungskopfs in einen Freiraum oberhalb der Schutzwand bewegt. Wie weiter oben dargestellt wurde, kann auf diese Weise der Arbeitsbereich bei der Bearbeitung des auf der drehbaren Werkstückauflage aufliegenden Werkstücks vergrößert werden. Wie weiter oben angegeben ist es in diesem Fall insbesondere bei der Laserbearbeitung günstig, aber nicht zwingend notwendig, dass das Verschließen der Öffnung mittels eines beweglichen Schutzelements erfolgt.

Bei einer Variante des Verfahrens wird ein Abstand zwischen der Bearbeitungsstellung und der Transportstellung des Schutzelements in Abhängigkeit von den Abmessungen des Werkstücks, insbesondere von der Höhe des Werkstücks, festgelegt. Durch die Einstellung der Öffnungsweite des in der Art einer Schutztür funktionierenden Schutzelements kann die vom Schutzelement zurückgelegte Strecke bzw. bei einer Vertikalbewegung des Schutzelements der Hub an die Werkstückabmessungen angepasst werden. Durch die Verringerung des Bewegungswegs des Schutzelements kann der zum Transport des Werkstücks benötigte Zeitraum minimiert werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1 a,b: eine schematische Seitenansicht und eine Draufsicht auf einen Rotationswerkstückwechsler einer Bearbeitungsmaschine, der eine drehbare Werkstückauflage mit einer mitdrehenden Schutzwand aufweist,
- Fig. 2a,b: schematische Darstellungen analog Fig. 1 a,b mit einem heb- und senkbaren Schutzelement in einer Bearbeitungsstellung, in der das Schutzelement an der mitdrehenden Schutzwand anliegt,
- Fig. 3: eine schematische Darstellung des Rotationswerkstückwechslers mit dem Schutzelement in einer Transportstellung zum Transport eines auf der drehbaren Werkstückauflage gelagerten Werkstücks, sowie
- Fig. 4: eine schematische Detaildarstellung des Schutzelements, welches die Schutzwand an ihrer Oberseite übergreift.

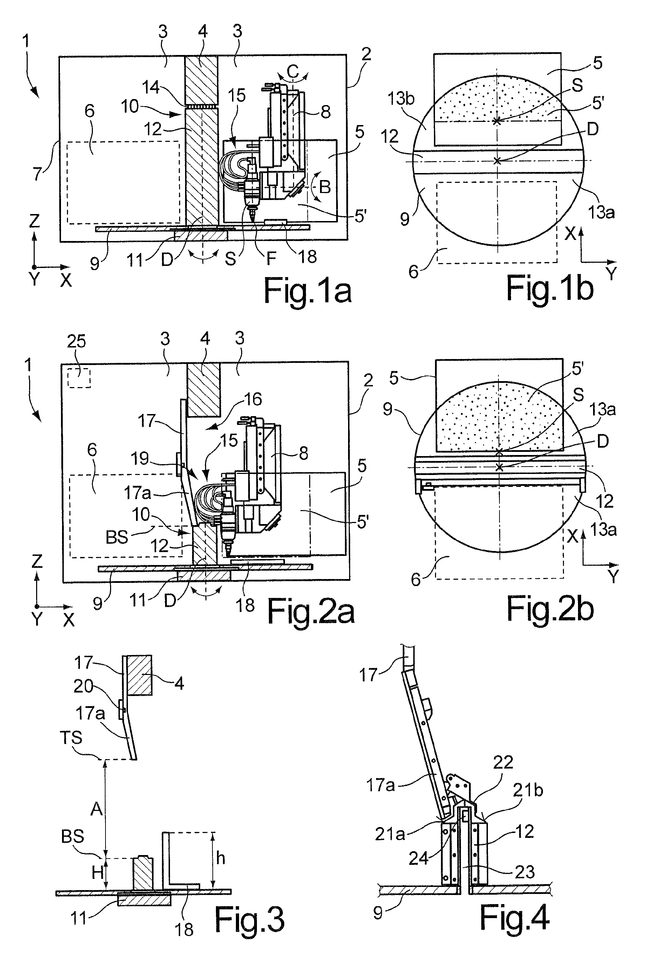

**Fig. 1a,b** zeigen eine Bearbeitungsmaschine 1 in Form einer Laserbearbeitungsmaschine zum thermischen Bearbeiten eines in Fig. 1 a,b nicht gezeigten Werkstücks. Die Bearbeitungsmaschine 1 weist ein Schutzgehäuse 2 auf, in dem ein Arbeitsraum 3 gebildet ist. Der Arbeitsraum 3 ist im vorliegenden Beispiel durch eine Trenneinrichtung 4 in Form einer Trennwand in einen Bearbeitungsbereich 5 und einen weiteren Arbeitsbereich 6 aufgeteilt. Der weitere Arbeitsbereich 6 dient zum Be- und Entladen von Werkstücken über eine an dem Schutzgehäuse 2 angebrachte Schutztüre 7, über die der weitere Bearbeitungsbereich für einen Bediener oder für eine maschinelle Be- und Entladeeinrichtung zugänglich ist. Ein Laserbearbeitungskopf 8 dient der Bearbeitung des Werkstücks innerhalb des Bearbeitungsbereichs 5.

Der Laserbearbeitungskopf 8 ist an einer kinematischen Führung zur Verfahrung angebracht. Diese kann z.B. als rotative Führung in Form eines Roboters (nicht gezeigt) ausgebildet sein. Alternativ ist der Laserbearbeitungskopf 8 an einer (nicht gezeigten) Koordinatenführung angebracht und an dieser mittels geeigneter Antriebe in X-Richtung, Y-Richtung und Z-Richtung eines XYZ-Koordinatensystems verschiebbar. Der Bearbeitungskopf 8 kann zudem um eine vertikale Drehachse (C-Achse) gedreht werden. Der Bearbeitungskopf 8 ist im vorliegenden Beispiel mehrteilig ausgebildet und weist ein Gehäuseteil auf, das um eine zur C-Achse senkrechte Drehachse (B-Achse) gedreht werden kann. In dem Bearbeitungskopf 8 ist eine nicht näher dargestellte Fokussieroptik untergebracht, um einen von einer Laserquelle zugeführten Laserstrahl zur Bearbeitung des Werkstücks an einer Fokusstelle F (auch als "tool center point", TCP, bezeichnet) zu fokussieren. Der Laserbearbeitungskopf 8, genauer gesagt die Fokusstelle F, kann mittels der Antriebe innerhalb des rechteckigen bzw. quaderförmigen Bearbeitungsbereichs 5 bewegt werden, der in Fig. 1a,b dargestellt ist. Nur in einem Teil dieses für den Laserbearbeitungskopf 8 theoretisch zugänglichen Bearbeitungsbereichs 5 kann eine Bearbeitung des Werkstücks erfolgen, wie nachfolgend näher ausgeführt wird.

Bei der Bearbeitung des Werkstücks liegt dieses auf einer drehbaren Werkstückauflage in Form eines Drehtellers 9 auf, welcher Teil eines Rotationswerkstückwechslers 10 ist. Der Rotationswerkstückwechsler 10 weist einen Drehantrieb 11 auf, um den Drehteller 9 um eine zentrische vertikale Drehachse D zu drehen. An dem Drehteller 9 ist eine Schutzwand 12 angebracht, welche sich in ihrer Längsrichtung über den gesamten Durchmesser des Drehtellers 9 erstreckt und welche die Fläche des Drehtellers 9 in zwei gleich große Teilflächen 13a,b unterteilt, die jeweils zur Auflage des Werkstücks dienen können. Der Durchmesser des Drehtellers 9 hängt vom Anwendungsfall ab und kann beispielsweise in der Größenordnung von ca. 1 Meter liegen.

Bei der in Fig. 1a,b gezeigten Stellung des Drehtellers 9 verläuft die Längsrichtung der Schutzwand 12 parallel zur Richtung, in der sich auch die Trennwand 4 erstreckt (Y-Richtung). Durch eine zwischen der Trennwand 4 und der Schutzwand 12 angebrachte Abdichtung, die im vorliegenden Beispiel durch ineinander greifende Bürsten 14 realisiert ist (vgl. Fig. 1 a) erfolgt bei der Bearbeitung des Werkstücks eine lichtdichte Abschirmung des Bearbeitungsbereichs 5 gegenüber dem weiteren Arbeitsbereich 6. Ein Transport des Werkstücks zwischen dem Bearbeitungsbereich 5 und dem weiteren Arbeitsbereich 6 vor bzw. nach dem Bearbeiten wird durch eine Drehbewegung des Drehtellers 9 um die Drehachse D mit einem Drehwinkel von 180° realisiert.

Bei der in Fig. 1 a,b gezeigten Bearbeitungsmaschine 1 besteht das Problem, dass das Material der Abdichtung 14 in der Regel Laserstrahlung mit hoher Energiedichte nicht standhalten kann, so dass zusätzliche Bauelemente zum Schutz der Abdichtung 14 gegen bei der Bearbeitung erzeugte Laserstrahlung erforderlich sind, beispielsweise in Form von zusätzlichen Blenden. Ein weiteres Problem besteht darin, dass der Bearbeitungskopf 8 selbst eine Störkontur bildet, da ein Teilbereich 15 des Bearbeitungskopfs 8 in X-Richtung über die Strahlachse S übersteht, entlang derer der Laserstrahl zum Fokuspunkt F geführt wird. Der Teilbereich 15 ist im vorliegenden Fall im Wesentlichen durch Versorgungsleitungen, die z.B. zur Gaszuführung bzw. zur (Kühl-) Wasserversorgung dienen, sowie durch elektrische Leitungen gebildet. Es versteht sich aber, dass auch überstehende Gehäuseteile des Bearbeitungskopfs 8 eine Störkontur für die Bearbeitung bilden können.

Wegen des überstehenden Teilbereichs 15 des Bearbeitungskopfs 8 kann eine Bearbeitung des auf dem Drehteller 9 aufliegenden Werkstücks nur in einem Abstand zur Schutzwand 12 erfolgen, der zumindest der Breite des überstehenden Teilbereichs 15 (in X-Richtung) entspricht. Der für die Bearbeitung maximal nutzbare Bearbeitungsbereich 5 ist in der XY-Ebene zudem durch die Abmessung einer jeweiligen Teilfläche 13a bzw. 13b des Drehtellers 9 begrenzt, da sich die Werkstückaußenkonturen bei der Drehbewegung innerhalb des Außendurchmessers des Drehtellers 9 befinden müssen. Wie insbesondere anhand von Fig. 1b zu erkennen ist, führt die Störkontur 15 dazu, dass eine vergleichsweise breite Fläche angrenzend zur Schutzwand 12 nicht zur Bearbeitung zur Verfügung steht, so dass der Bearbeitungsbereich 5 auf den in Fig. 1b gepunktet dargestellten Flächenabschnitt 5' begrenzt ist.

**Fig. 2a,b** zeigen eine Bearbeitungsmaschine 1, bei der die oben beschriebenen Probleme vermieden werden können. Bei der Bearbeitungsmaschine 1 ist die Schutzwand 12 des Rotationswerkstückwechslers 10 in der Höhe (Z-Richtung) gegenüber der Schutzwand 12 von Fig. 1 a,b verkürzt, so dass diese nicht mehr über den Bearbeitungsbereich 5 nach oben übersteht. Eine Öffnung 16, die in der Trennwand 4 vorgesehen ist, um das Werkstück auf dem Drehteller 9 zu transportieren, wird von der Schutzwand 12 nur teilweise abgedeckt. Um während der Werkstückbearbeitung den weiteren Arbeitsbereich 6 gegenüber dem Bearbeitungsbereich 5 abzuschirmen, ist an der Trennwand 4 ein Schutzelement 17 (Hubtüre) angebracht, welches in vertikaler Richtung (Z-Richtung) mittels eines nicht näher beschriebenen Linearantriebs verschiebbar, d.h. heb- und senkbar ist.

In Fig. 2a ist das Schutzelement 17 in einer Bearbeitungsstellung BS gezeigt, in der das Schutzelement 17, genauer gesagt ein Auslegerarm 17a des Schutzelements 17 an einem an der Oberseite der Schutzwand 12 gebildeten Absatz anliegt. Die Schutzwand 12 und das Schutzelement 17 verschließen in der Bearbeitungsstellung BS die Öffnung 16 lichtdicht, so dass keine Laserstrahlung vom Bearbeitungsbereich 5 in den weiteren Arbeitsbereich 6 gelangen kann. Um auftreffende Laserstrahlung abzuschirmen kann das Schutzelement 17 beispielsweise zumindest an seiner dem Bearbeitungsbereich 5 zugewandten Außenseite aus einem metallischen Material bestehen, welches die Laserstrahlung reflektiert, so dass eine Beschädigung des Schutzelements 17 durch am bearbeiteten Werkstück 18 reflektierte Laserstrahlung wenig wahrscheinlich ist.

Das Schutzelement 17 ist an der dem Bearbeitungsbereich 5 abgewandten Seite der Trennwand 4 angebracht. Auf diese Weise wird zwischen der Unterseite der Trennwand 4 und der Oberseite der Schutzwand 12 ein Freiraum 19 gebildet, welcher ausgenutzt werden kann, um den überstehenden Teilbereich 15 des Laserbearbeitungskopfs 8 in den Freiraum 19 einzuführen. Auf diese Weise kann der Laserbearbeitungskopf 8 näher an die Schutzwand 12 herangefahren werden als dies bei der Bearbeitungsmaschine 1 von Fig. 1 a,b der Fall ist, so dass sich der zur Werkstückbearbeitung nutzbare Flächenabschnitt 5' in der XY-Ebene entsprechend vergrößert, wie in Fig. 2b zu erkennen ist. Wie in Fig. 2a zu erkennen ist, ist die Unterseite des (dreidimensionalen) Bearbeitungsbereichs 5 von der Oberseite des Drehtellers 9 beabstandet. Dies ist günstig, um Raum für eine Aufnahmeeinrichtung zur Aufnahme von ebenen oder dreidimensionalen Werkstücken bei der Bearbeitung zu schaffen, beispielsweise für einen Schneidkasten oder für Spannfutter auf einer Drehachse.

**Fig. 3** zeigt ein Detail der Bearbeitungsmaschine 1 von Fig. 2a,b mit dem Schutzelement 17 in einer Transportposition TS, in der das Schutzelement 17 zur Schutzwand 12 in einem Abstand A in vertikaler Richtung beabstandet ist. Bei der in Fig. 3 gewählten Darstellung ist das Schutzelement 17 in einem maximal möglichen Abstand A zur Schutzwand 12 dargestellt. Es versteht sich aber, dass das Schutzelement 17 nicht in jedem Fall in eine Transportposition TS verbracht werden muss, in dem dieses den maximal möglichen Abstand A zur Schutzwand 12 aufweist. Vielmehr ist es günstig, den Abstand A in Abhängigkeit von den Abmessungen des Werkstücks 18 zu wählen und zwar derart, dass die Summe aus der Höhe H der Schutzwand 12 und dem Abstand A größer ist als die Höhe h des auf dem Drehteller 9 aufliegenden Werkstücks 18 (gemessen von der Oberseite des Drehtellers 9). Die Summe H + A sollte hierbei die Höhe h des Werkstücks 18 nicht deutlich (in der Regel maximal 10-20%) übersteigen, um den Bewegungsweg des Schutzelements 17 und damit die zum Transport des Werkstücks 18 erforderliche Zeitdauer zu minimieren.

**Fig. 4** zeigt eine Detaildarstellung des Schutzelements 17 und der Schutzwand 12 in der Bearbeitungsstellung BS, in der beide zum lichtdichten Verschließen der (in Fig. 4 nicht gezeigten) Öffnung 16 ineinander greifen. Wie weiter oben beschrieben wurde, weist das im Wesentlichen plattenförmige Schutzelement 17 einen Auslegerarm 17a auf, welcher in der Bearbeitungsstellung BS zur Schutzwand 12 hin geneigt ist. Wie in Fig. 4 gezeigt ist, ist der Auslegerarm 17a mit seinem freien Ende an einer dem Bearbeitungsbereich 5 abgewandten Seite der Schutzwand 12, genauer gesagt an einem dort gebildeten Absatz 21 a positionierbar. An dem Auslegerarm 17a ist im Bereich des freien Endes eine Abschirmung 22 in Form eines Abschirmblechs angebracht, welches die Schutzwand 12 übergreift, so dass dessen freies Ende an der dem Bearbeitungsbereich 5 zugewandten Seite der Schutzwand 12 im Bereich eines dort gebildeten Absatzes 21 b anliegt. Hierdurch ist in der Bearbeitungsstellung BS das zwischen den Absätzen 21 a,b liegende obere Ende der Schutzwand 12 von beiden Seiten von dem Schutzelement 17 umgeben.

In Fig. 4 ebenfalls erkennbar ist ein in der Schutzwand 12 gebildeter Hohlraum 23, welcher beispielsweise zur Aufnahme von Automatisierungskomponenten dienen kann. Im vorliegenden Beispiel ist der Hohlraum 23 lichtdicht verschlossen und es ist in dem Hohlraum 23 ein Sensor 24 zur Detektion von Laserstrahlung bzw. von in den Hohlraum 23 eintretendem Licht vorgesehen. Der Sensor 24 steht mit einer Steuereinrichtung 25 (vgl. Fig. 2a) in signaltechnischer Verbindung. Sofern vom Sensor 24 das Überschreiten eines Schwellwerts der detektierten Strahlungsintensität gemessen wird, deutet dies auf eine Beschädigung der Schutzwand 12 hin. Dies wird von der Steuereinrichtung 25 erkannt, so dass diese eine Warnung an einen Bediener ausgeben und/oder die Bearbeitung des Werkstücks 18 stoppen kann. Alternativ oder zusätzlich kann auch an dem Schutzelement 17 ein Hohlraum gebildet werden, in dem ebenfalls Automatisierungskomponenten und/oder ein Sensor 20 (vgl. Fig. 3) angebracht werden können, um das Eindringen von Strahlung in den Hohlraum des Schutzelements 17 zu detektieren. Es versteht sich, dass der Einsatz der Sensoren 20, 24 insbesondere bei der Verwendung von sehr hohen Laserleistungen von ca. 1 KW oder darüber sinnvoll ist.

Die Steuereinrichtung 25 dient auch zur Ansteuerung des Laserbearbeitungskopfs 8 bei der Bearbeitung des Werkstücks 18 sowie zur Ansteuerung des Drehantriebs 11 des Rotationswerkstückwechslers 10. Auch ein Linearantrieb zur Bewegung des Schutzelements 12 wird von der Steuereinrichtung 18 angesteuert. Die Steuereinrichtung 25 greift zu diesem Zweck auf einen Speicher bzw. auf eine Datenbank zurück, in der die Daten des Werkstücks 18 sowie ein Bearbeitungsprogramm für die Bearbeitung des Werkstücks 18 hinterlegt sind. In den Daten des Werkstücks 18 sind auch die Abmessungen, insbesondere die Höhe des Werkstücks 18, enthalten. Die Steuereinrichtung 25 ist programmiert, mit Hilfe dieser Daten einen geeigneten werkstückabhängigen Abstand A zwischen der Bearbeitungsstellung BS und der Transportstellung TS des Schutzelements 17 einzustellen.

Bei der oben beschriebenen Bearbeitungsmaschine 1 wird das verschiebbare Schutzelement 17 auf günstige Weise mit dem Vorsehen eines Freiraums 19 für den Bearbeitungskopf kombiniert. Es ist aber auch möglich, auf das verschiebbare Schutzelement 17 zu verzichten, insbesondere wenn die Bearbeitungsmaschine nicht zur Bearbeitung des Werkstücks mittels eines Laserstrahls ausgelegt ist, sondern die Bearbeitung auf andere Weise, z.B. durch spanende Bearbeitung erfolgt. Der Freiraum 19 kann beispielsweise dadurch erzeugt werden, dass die Trennwand 4 weiter vom Bearbeitungsbereich 5 entfernt angeordnet wird als die Schutzwand 12, so dass beide sich nur noch teilweise an der dem Bearbeitungsbereich 5 abgewandten Seite der Schutzwand 12 überlappen. Auch kann ggf. die Trennwand 4 im Bereich der Öffnung 16 in der Dicke reduziert werden, wobei der in der Dicke reduzierte Abschnitt der Trennwand 4 entlang der dem Bearbeitungsbereich 5 abgewandten Seite der Schutzwand 12 verläuft.

## Patentansprüche

1. Bearbeitungsmaschine (1), umfassend:
eine Trenneinrichtung (4) zur Aufteilung eines Arbeitsraums (3) in einen Bearbeitungsbereich (5) zum Bearbeiten eines Werkstücks (18) und in mindestens einen weiteren Arbeitsbereich (6),
einen Bearbeitungskopf, insbesondere einen Laserbearbeitungskopf (8), zum Bearbeiten des Werkstücks (18) in dem Bearbeitungsbereich (5),
einen Rotationswerkstückwechsler (10) mit einer drehbaren Werkstückauflage (9) zum Transport des Werkstücks (18) zwischen dem Bearbeitungsbereich (5) und dem mindestens einen weiteren Arbeitsbereich (6) durch eine an der Trenneinrichtung (4) gebildete Öffnung (16), wobei die drehbare Werkstückauflage (9) eine Schutzwand (12) aufweist, um bei der Bearbeitung des Werkstücks (18) den mindestens einen weiteren Arbeitsbereich (6) gegenüber dem Bearbeitungsbereich (5) abzuschirmen,
wobei die Trenneinrichtung (4) ein Schutzelement (17) aufweist, das zwischen einer Bearbeitungsstellung (BS) und einer Transportstellung (TS) bewegbar ist, wobei das Schutzelement (17) in der Bearbeitungsstellung (BS) zum Verschließen der Öffnung (16) an der Schutzwand (12) anliegt, wobei das Schutzelement (17) in der Transportstellung (TS) von der Schutzwand (12) beabstandet ist, und wobei ein Abstand (A) zwischen der Bearbeitungsstellung (BS) und der Transportstellung (TS) des Schutzelements (17) in Abhängigkeit von den Abmessungen des Werkstücks (18) einstellbar ist.

2. Bearbeitungsmaschine nach Anspruch 1, bei der an der Öffnung (16) der Trenneinrichtung (4) angrenzend zur Schutzwand (12) ein Freiraum (19) für den Eingriff eines Teilbereichs (15) des Bearbeitungskopfs (8) gebildet ist.

3. Bearbeitungsmaschine nach Anspruch 1 oder 2, bei welcher das Schutzelement (17) an einer dem Bearbeitungsbereich (5) abgewandten Seite der Trenneinrichtung (4) angebracht ist.

4. Bearbeitungsmaschine nach Anspruch 3, bei welcher das Schutzelement (17) einen zur Schutzwand (12) hin geneigten Auslegerarm (17a) aufweist, der mit seinem freien Ende in der Bearbeitungsstellung (BS) an einer dem Bearbeitungsbereich (5) abgewandten Seite der Schutzwand (12) positionierbar ist.

5. Bearbeitungsmaschine nach einem der vorhergehenden Ansprüche, bei welcher das Schutzelement (17) in der Bearbeitungsstellung (BS) die Schutzwand (12) übergreift.

6. Bearbeitungsmaschine nach Anspruch 5, bei welcher das Schutzelement (17) zum Übergreifen der Schutzwand (12) eine Abschirmung (22) aufweist, welche in der Bearbeitungsstellung (BS) an einer dem Bearbeitungsbereich (5) zugewandten Seite der Schutzwand (12) positionierbar ist.

7. Bearbeitungsmaschine nach einem der vorhergehenden Ansprüche, bei welcher das Schutzelement (17) zwischen der Bearbeitungsstellung (BS) und der Transportstellung (TS) insbesondere in vertikaler Richtung (Z) linear beweglich ist.

8. Bearbeitungsmaschine nach einem der vorhergehenden Ansprüche, bei welcher der Abstand (A) zwischen der Bearbeitungsstellung (BS) und der Transportstellung (TS) des Schutzelements (17) in Abhängigkeit von der Höhe (h) des Werkstücks (18) einstellbar ist.

9. Bearbeitungsmaschine nach einem der vorhergehenden Ansprüche, bei welcher in der Schutzwand (12) und/oder in dem Schutzelement (17) ein Hohlraum (23) gebildet ist.

10. Bearbeitungsmaschine nach Anspruch 9, bei welcher in dem Hohlraum (23) mindestens ein Sensor (24) zur Detektion von in den Hohlraum (23) eintretender Bearbeitungsstrahlung angeordnet ist.

11. Verfahren zum Bearbeiten eines Werkstücks (18) mittels einer Bearbeitungsmaschine (1) nach einem der vorhergehenden Ansprüche, umfassend:
in einem dem Bearbeiten vorausgehenden Schritt:
Bewegen des Schutzelements (17) in die Bearbeitungsstellung (BS), in der das Schutzelement (17) an der Schutzwand (12) anliegt,
Bearbeiten des Werkstücks (18) in dem Bearbeitungsbereich (5) mittels des Bearbeitungskopfs (8), und
nach dem Bearbeiten:
Bewegen des Schutzelements (17) von der Bearbeitungsstellung (BS) in die Transportstellung (TS), sowie
Drehen der drehbaren Werkstückauflage (9) zum Verbringen des bearbeiteten Werkstücks (18) von dem Bearbeitungsbereich (5) in den weiteren Arbeitsbereich (6), wobei ein Abstand (A) zwischen der Bearbeitungsstellung (BS) und der Transportstellung (TS) des Schutzelements (17) in Abhängigkeit von den Abmessungen des Werkstücks (18) festgelegt wird.

12. Verfahren nach Anspruch 11, bei dem beim Bearbeiten des Werkstücks (18) ein Teilbereich (15) des Bearbeitungskopfs (8) in einen oberhalb der Schutzwand (12) gebildeten Freiraum (19) eingreift.

13. Verfahren nach Anspruch 11 oder 12, bei dem der Abstand (A) zwischen der Bearbeitungsstellung (BS) und der Transportstellung (TS) des Schutzelements (17) in Abhängigkeit von der Höhe (h) des Werkstücks (18) festgelegt wird.

## Claims

1. Processing machine (1) comprising:
a separation device (4) for dividing an operating space (3) into a processing region (5) for processing a workpiece (18) and into at least one additional operating region (6),
a processing head, in particular a laser processing head (8), for processing the workpiece (18) in the processing region (5), a rotary workpiece changer (10) having a rotatable workpiece support (9) for transporting the workpiece (18) between the processing region (5) and the at least one additional operating region (6) by means of an opening (16) formed in the separation device (4), the rotatable workpiece support (9) having a protection wall (12) in order, when the workpiece (18) is processed, to shield the at least one additional operating region (6) with respect to the processing region (5),
wherein the separation device (4) has a protection element (17) which can be moved between a processing position (BS) and a transport position (TS), the protection element (17) being in abutment with the protection wall (12) in the processing position (BS) to close the opening (16), the protection element (17) being spaced apart from the protection wall (12) in the transport position (TS), and a spacing (A) between the processing position (BS) and the transport position (TS) of the protection element (17) being able to be adjusted in dependence on the dimensions of the workpiece (18).

2. Processing machine according to claim 1, wherein there is formed at the opening (16) of the separation device (4) adjacent to the protection wall (12) a free space (19) for engagement of a part-region (15) of the processing head (8).

3. Processing machine according to claim 1 or claim 2, wherein the protection element (17) is mounted on a side of the separation device (4) facing away from the processing region (5).

4. Processing machine according to claim 3, wherein the protection element (17) has an extension arm (17a) which is inclined in the direction towards the protection wall (12) and which can be positioned in the processing position (BS) with the free end thereof at a side of the protection wall (12) facing away from the processing region (5).

5. Processing machine according to any one of the preceding claims, wherein the protection element (17) engages over the protection wall (12) in the processing position (BS).

6. Processing machine according to claim 5, wherein the protection element (17) for engaging over the protection wall (12) has a shielding (22) which can be positioned in the processing position (BS) at a side of the protection wall (12) facing the processing region (5).

7. Processing machine according to any one of the preceding claims, wherein the protection element (17) can be moved in a linear manner between the processing position (BS) and the transport position (TS), in particular in a vertical direction (Z).

8. Processing machine according to any one of the preceding claims, wherein the spacing (A) between the processing position (BS) and the transport position (TS) of the protection element (17) can be adjusted in dependence on the height (h) of the workpiece (18).

9. Processing machine according to any one of the preceding claims, wherein a hollow space (23) is formed in the protection wall (12) and/or in the protection element (17).

10. Processing machine according to claim 9, wherein at least one sensor (24) for detecting processing radiation entering the hollow space (23) is/are arranged in the hollow space (23).

11. Method for processing a workpiece (18) by means of a processing machine (1) according to any one of the preceding claims, comprising:
in a step which precedes the processing operation:
moving the protection element (17) into the processing position (BS), in which the protection element (17) is in abutment with the protection wall (12),
processing the workpiece (18) in the processing region (5) by means of the processing head (8), and
after the processing operation:
moving the protection element (17) from the processing position (BS) into the transport position (TS) and
rotating the rotatable workpiece support (9) to move the processed workpiece (18) from the processing region (5) into the additional operating region (6), a spacing (A) between the processing position (BS) and the transport position (TS) of the protection element (17) being determined in dependence on the dimensions of the workpiece (18).

12. Method according to claim 11, wherein a part-region (15) of the processing head (8) engages in a free space (19) formed above the protection wall (12) when the workpiece (18) is processed.

13. Method according to claim 11 or claim 12, wherein the spacing (A) between the processing position (BS) and the transport position (TS) of the protection element (17) is determined in dependence on the height (h) of the workpiece (18).

## Revendications

1. Machine d'usinage (1) comprenant :
un dispositif de séparation (4) conçu pour scinder un espace de travail (3) en une zone d'usinage (5), dévolue à l'usinage d'une pièce (18), et en au moins une zone de travail (6) supplémentaire,
une tête d'usinage, en particulier une tête (8) d'usinage au laser conçue pour usiner ladite pièce (18) dans ladite zone d'usinage (5),
un changeur rotatif (10) de pièces à usiner, muni d'un support rotatif (9) de pièces à usiner affecté au transport de ladite pièce (18) entre ladite zone d'usinage (5) et ladite au moins une zone de travail (6) supplémentaire à travers une ouverture (16) pratiquée dans ledit dispositif de séparation (4), ledit support rotatif (9) de pièces à usiner présentant une paroi protectrice (12) en vue de cloisonner ladite au moins une zone de travail (6) supplémentaire par rapport à ladite zone d'usinage (5) au cours de l'usinage de ladite pièce (18),
ledit dispositif de séparation (4) étant doté d'un élément de protection (17) pouvant être mû entre une position d'usinage (BS) et une position de transport (TS),
l'élément de protection (17) étant en applique contre la paroi protectrice (12) dans la position d'usinage (BS), afin d'obturer ladite ouverture (16), sachant que ledit élément de protection (17) se trouve à distance de ladite paroi protectrice (12) dans la position de transport (TS), et sachant qu'une distance (A), entre ladite position d'usinage (BS) et ladite position de transport (TS) dudit élément de protection (17), peut être réglée en fonction des dimensions de ladite pièce (18).

2. Machine d'usinage selon la revendication 1, dans laquelle un espace libre (19) limitrophe de la paroi protectrice (12), dédié à la pénétration d'une région partielle (15) de la tête d'usinage (8), est réservé au niveau de l'ouverture (16) du dispositif de séparation (4).

3. Machine d'usinage selon la revendication 1 ou 2, dans laquelle l'élément de protection (17) est installé sur un côté du dispositif de séparation (4) pointant à l'opposé de la zone d'usinage (5).

4. Machine d'usinage selon la revendication 3, dans laquelle l'élément de protection (17) est pourvu d'un bras (17a) en porte-à-faux qui est incliné en direction de la paroi protectrice (12) et peut être positionné par son extrémité libre, dans la position d'usinage (BS), sur un côté de ladite paroi protectrice (12) pointant à l'opposé de la zone d'usinage (5).

5. Machine d'usinage selon l'une des revendications précédentes, dans laquelle l'élément de protection (17) coiffe la paroi protectrice (12) dans la position d'usinage (BS).

6. Machine d'usinage selon la revendication 5, dans laquelle l'élément de protection (17) comporte, en vue de coiffer la paroi protectrice (12), un bouclier (22) pouvant être positionné, dans la position d'usinage (BS), sur un côté de ladite paroi protectrice (12) tourné vers la zone d'usinage (5).

7. Machine d'usinage selon l'une des revendications précédentes, dans laquelle l'élément de protection (17) est mobile linéairement entre la position d'usinage (BS) et la position de transport (TS), en particulier dans le sens vertical (Z).

8. Machine d'usinage selon l'une des revendications précédentes, dans laquelle la distance (A), entre la position d'usinage (BS) et la position de transport (TS) de l'élément de protection (17), peut être réglée en fonction de la hauteur (h) de la pièce (18).

9. Machine d'usinage selon l'une des revendications précédentes, dans laquelle une cavité (23) est ménagée dans la paroi protectrice (12) et/ou dans l'élément de protection (17).

10. Machine d'usinage selon la revendication 9, dans laquelle au moins un capteur (24), affecté à la détection d'un rayonnement d'usinage pénétrant dans la cavité (23), est logé dans ladite cavité (23).

11. Procédé d'usinage d'une pièce (18) au moyen d'une machine d'usinage (1) conforme à l'une des revendications précédentes,
consistant :
au cours d'une étape précédant l'usinage :
à mouvoir l'élément de protection (17) jusqu'à la position d'usinage (BS), dans laquelle ledit élément de protection (17) est en applique contre la paroi protectrice (12),
à usiner la pièce (18) dans la zone d'usinage (5), au moyen de la tête d'usinage (8), et
à l'issue de l'usinage :
à mouvoir ledit élément de protection (17) de la position d'usinage (BS) à la position de transport (TS),
ainsi qu'à faire tourner le support rotatif (9) de pièces à usiner, de manière à transférer la pièce (18) usinée depuis ladite zone d'usinage (5) jusque dans la zone de travail (6) supplémentaire, sachant qu'une distance (A), entre ladite position d'usinage (BS) et ladite position de transport (TS) dudit élément de protection (17), est établie en fonction des dimensions de ladite pièce (18).

12. Procédé selon la revendication 11, dans lequel une région partielle (15) de la tête d'usinage (8) pénètre, au cours de l'usinage de la pièce (18), dans un espace libre (19) réservé au-dessus de la paroi protectrice (12).

13. Procédé selon la revendication 11 ou 12, dans lequel la distance (A), entre la position d'usinage (BS) et la position de transport (TS) de l'élément de protection (17), est établie en fonction de la hauteur (h) de la pièce (18).
